# EUROPEAN PATENT SPECIFICATION

(11) **EP 2 783 920 B1**
(45) Date of publication and mention of the grant of the patent: **14.09.2016**
(21) Application number: 14161898.3
(22) Date of filing: 27.03.2014
(51) Int. Cl.: B60R 13/04

(54) **Industrial vehicle body**
Nutzfahrzeug
Véhicule industriel

(30) Priority: 28.03.2013 IT VR20130076
(43) Date of publication of application: 01.10.2014
(73) Proprietor: Gianfranco, Natali, 6924 Sorengo (CH)
(72) Inventor: Gianfranco, Natali, 6924 Sorengo (CH)
(74) Representative: Ponchiroli, Simone

(56) References cited:
- EP-B1- 1 582 412
- JP-A- H06 286 520
- US-A- 4 253 785
- US-A1- 2005 040 670

## Description

This invention relates to an industrial vehicle body and, in particular, to the protective element with which it is equipped and connection of the latter to the cab guard or the side board.

At present, protective elements have an elongate shape along the line of extension of the side board or of the cab guard, and are in general constituted of an inverted U-shaped element having an upper wall and two lateral walls which extend downwards on the two sides of the upper wall. This inverted U-shaped element is substantially shaped to match the upper edge/part of the side board or the cab guard to which it is applied. According to a first embodiment, described in the prior art of patent EP 1 582 412 B1, all of the walls are made of a single soft material, and the protective element is coupled to the upper edge by means of two rigid plates which are superposed one on each lateral wall at a special housing and which are connected to the side board or to the cab guard by means of screws or rivets passing through the protective element.

In an alternative embodiment it is the upper wall of the protective element which is fixed to the side board or to the cab guard by means of screws or rivets passing through it.

However, these initial embodiments had several major disadvantages. In particular, they made installation operations relatively complex and lengthy, requiring the use of screws or rivets. Moreover, this type of protective elements could not even be glued, since in that case it would have been necessary to ensure that the glue acts on all of the walls of the protective element and in particular at its lateral walls. Otherwise, in fact, due to the high level of flexibility of the material used to make the protective element, the lateral walls would have tended to become detached within a short time.

An excellent solution to these problems was then proposed in patent EP 1 582 412 B1, which relates to a protective element constituted of a lower part and an upper part made of different materials. The lower part was made of a semi-rigid material and had an inverted U shape. In contrast, the upper part was made of a soft material (usually rubber) and was fixed to the lower part. Thanks to the use of the semi-rigid lower part, this type of protective element can be fixed to the cab guard or to a side board even by simply gluing. Despite the benefits of that embodiment, the Applicant has found that said solution could be further improved on.

In particular, it was seen that the use of glue for connecting the protective element, although being much simpler and more error-free than the use of screws and rivets, has the disadvantage of requiring a wait time before the gluing can be considered definitive. Consequently, for several hours it is not possible to subject the protective element to any stress. This goes against the fact that, during production, it is important to be able to reduce downtimes.

A second disadvantage relating to the use of glue alone is linked to the positioning of the protective element on side boards on which angled loads can be rested during use. That problem is particularly relevant to the cab guard and the pole rest where loads too long to fit in the bed (such as poles) can be rested on an edge of the protective element, said loads being angled upwards. In fact, during vehicle movement, with each braking action (in the case of a cab guard) or acceleration (in the case of a rear pole rest) these loads generate a thrust from the bottom upwards on the edge of the protective element which tends to rotate the protective element relative to the edge of the side board, a stress which tends to cause the glued part to become detached.

Furthermore, in the case of glued protective elements, there may be problems during the step of removing them from the side boards, both during dismantling at the end of the lifetime of the vehicle body for suitable recycling of the various materials, and in the case of maintenance work during which it is necessary to substitute the protective elements.

Patent document JPH06-286520A discloses an industrial vehicle body comprising a bed and a plurality of perimetric side boards, where at least one protective element is mounted at an upper edge of at least one perimetric side board, the protective element comprising, transversally to its own main line of extension, an inverted U-shaped cross-section, the protective element also comprising an upper wall extending mainly horizontally and comprising a lower coupling face resting on said upper edge, and two lateral walls which are fixed to the upper wall, extending mainly vertically and each comprising an inner coupling face which is at least partly opposite said at least one perimetric side board, the upper wall and the lateral walls being part of the semi-rigid body, wherein each lateral wall comprises a first portion projecting towards the other lateral wall relative to a second portion of the lateral wall itself which is adjacent to the first portion on the side of the upper wall, said first projecting portion forming a hooking housing in which at least one third portion is inserted, belonging to the at least one perimetric side board, the interaction between the first portion and the third portion opposing the upward sliding and rotation about itself of the protective element, wherein the protective element is hooked snap-on style to the at least one perimetric side board.

In this context the technical purpose which forms the basis of this invention is to provide an industrial vehicle body which overcomes the above-mentioned disadvantages.

In particular, the technical purpose of this invention is to provide an industrial vehicle body in which the protective element can be easily mounted in a fast and error-free way, and can be immediately subjected to stresses if necessary.

In particular, the technical purpose of this invention is to provide an industrial vehicle body in which the protective element is also more resistant to stresses which tend to make it rotate, compared with prior art glued elements.

In particular, the technical purpose of this invention is to provide an industrial vehicle body in which it is in any case easier to remove from the vehicle body a protective element which has reached the end of its useful lifetime.

The technical purpose specified and the aims indicated are achieved by an industrial vehicle body as described in claim 1.

Further features and the advantages of this invention are more apparent in the detailed description, with reference to the accompanying drawings which illustrate several preferred, non-limiting embodiments of an industrial vehicle body, in which:
- Figure 1 is an axonometric view of an industrial vehicle body made in accordance with a first embodiment of this invention;
- Figure 2 shows a detail of the cab guard of the body of Figure 1 without a protective element;
- Figure 3 shows an enlarged detail of the cab guard of Figure 2;
- Figure 4 is an axonometric view, partly in vertical section, of a detail of the cab guard of the body of Figure 1;
- Figure 5 is a vertical cross-section of the protective element of the body of Figures 1 and 4;
- Figure 6 is a cross-section of the upper part of only the cab guard of Figure 4 according to the line VI - VI;
- Figure 7 shows the upper part of the cab guard of Figure 6 with the protective element associated with it;
- Figure 8 shows an alternative embodiment with the same parts as Figure 7;
- Figure 9 is an axonometric view of the cab guard of an industrial vehicle body made in accordance with a second embodiment of this invention;
- Figure 10 is a vertical section of the upper part of the cab guard and the protective element hooked to it of the body of Figure 9 according to the line X - X; and
- Figure 11 is a vertical section of a first alternative embodiment of what is shown in Figure 10;
- Figure 12 is a vertical section of a second alternative embodiment of what is shown in Figure 10; and
- Figure 13 is a vertical section of a further alternative embodiment of this invention.

It should be noticed that, to make the accompanying drawings easier to understand, the hatching indicating the parts shown in cross-section has been omitted except for the part of the protective element which is made of soft material.

With reference to the accompanying drawings the numeral 1 denotes in its entirety an industrial vehicle body in accordance with this invention.

Similarly to prior art bodies, the industrial vehicle body 1 which is the subject matter of this invention in general comprises a bed 2, a front cab guard 3 and a plurality of perimetric side boards 4 (two lateral and one rear in the accompanying drawings; however, it is possible that two or more side boards may be positioned one after another on each side). The perimetric side boards 4 may either be openable, as in the accompanying drawings, or fixed.

However, it should be noticed that the term cab guard 3 refers to a particular type of perimetric side board 4, which in the vehicle is positioned behind the cab and is taller than the others, in such a way as to protect the cab from the load contained in the body 1. However, in general, this invention may also be applied to bodies in which the front perimetric side board 4 is not shaped in such a way as to act as a cab guard 3. However, hereinafter the term perimetric side board 4 refers to both a low front side board and a cab guard 3 if necessary.

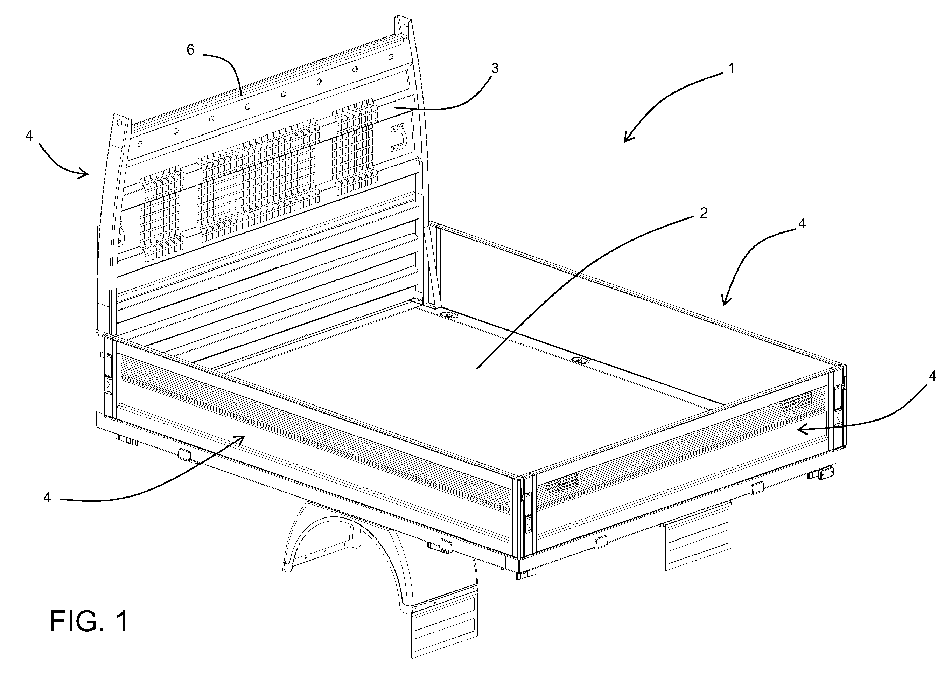

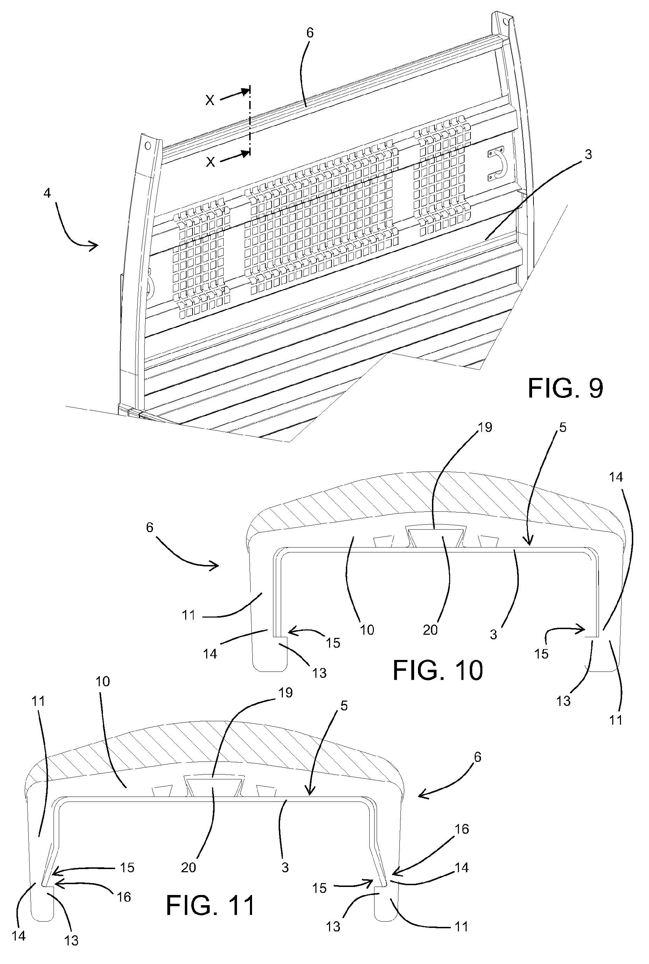

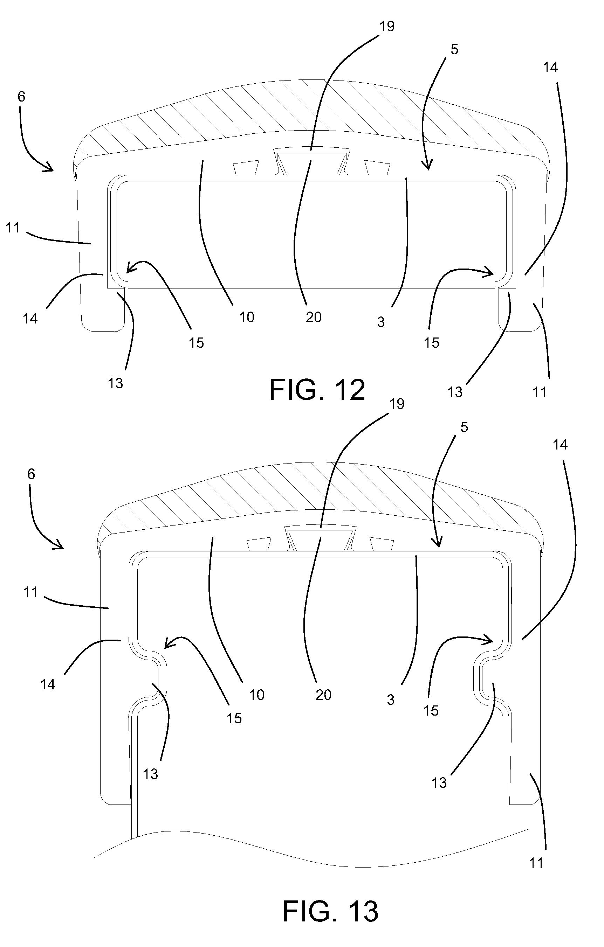

For all of the perimetric side boards 4 present it is possible to identify an upper edge 5 which is facing upwards when the side boards 4 are closed. However, depending on the embodiments, the upper edge 5 of each perimetric side board 4 may either correspond with the upper edge 5 of the panel forming the entire side board (Figure 1), or it may be constituted of a separate element relative to the panel and placed above and distanced from it (as in Figure 9). In the latter case, in the sector the term pole rest is usually used (that is to say, a raised support on which in use it is possible to rest poles which are longer than the entire body 1). In most cases the pole rest is made of a tubular element (Figure 12) or of a section bar, as is the case in the embodiments in Figures 9 to 11 where the pole rest is constituted of a metal section bar having an inverted U shape respectively with the sides vertical (Figures 9 and 10) and with the sides diverging in the lower part (Figure 11).

At least one protective element 6 is mounted at the upper edge 5 of at least one perimetric side board 4. This means that the protective element 6 may be applied to the rear side board, to a lateral side board, to a low front side board (solutions not illustrated) or to a cab guard 3 (solution illustrated in the accompanying drawings). It also means that the protective element 6 may be applied directly to the panel forming the entire side board (Figure 1) or to a pole rest positioned above that panel and distanced from it (Figure 9).

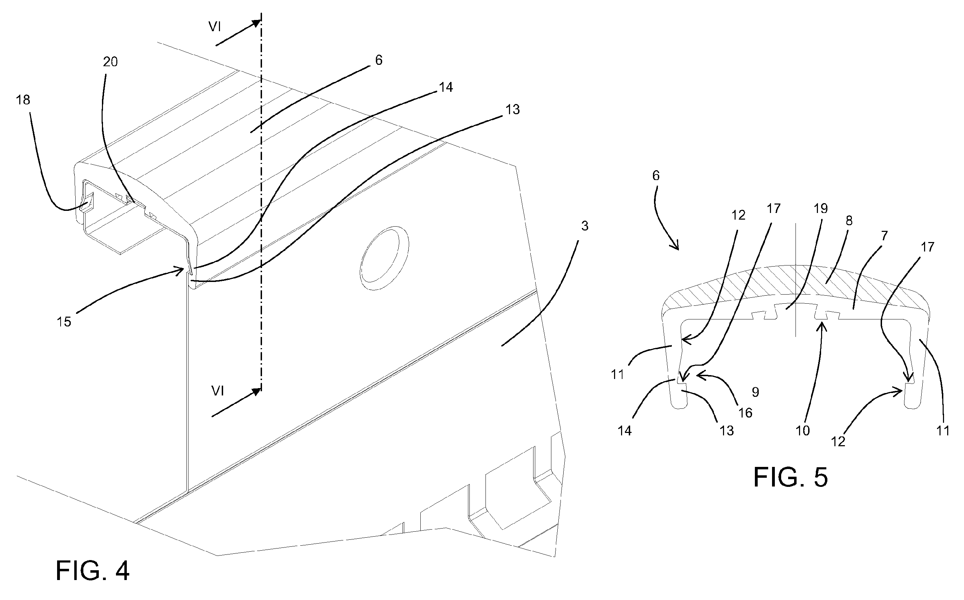

As can be seen in particular in Figure 5, the protective element 6 has, transversally to its own main line of extension, an inverted U-shaped cross-section and comprises at least one semi-rigid body 7 at the bottom. However, in the preferred embodiment, applied on top of the semi-rigid body 7 there is a shaped layer 8 of soft material (advantageously the two are coextruded) which advantageously has elastic behaviour (for example, it may be made of rubber). In the preferred embodiment (Figure 5), transversally to the main line of extension, the shaped layer 8 of soft material has variable thickness. In particular, it has at least a first thickness at its own central part and a second thickness at its own lateral edges, the first thickness being greater than the second thickness. Even more preferably, in the embodiment illustrated, the shaped layer 8 of soft material has a thickness which gradually decreases from the centre towards the lateral edges (towards the right and the left in Figure 5).

In the semi-rigid body 7 it is possible to identify an upper wall 9 extending mainly horizontally and comprising a lower coupling face 10 resting on the upper edge 5 of the perimetric side board 4, and two lateral walls 11 which are fixed to the two sides of the upper wall 9. The lateral walls 11 extend mainly vertically (they may converge slightly downwards especially when the protective element 6 is not coupled to the side board). Each lateral wall 11 also comprises an inner coupling face 12 which is opposite the perimetric side board 4 when the protective element 6 is mounted on the perimetric side board 4.

According to the innovative aspect of this invention, the protective element 6 is hooked snap-on style on the upper edge 5 (it is fitted thanks to elastic deformation of the semi-rigid body 7) and for that purpose each lateral wall 11 comprises a first portion 13 projecting towards the other lateral wall 11 relative to a second portion 14 of the lateral wall 11 which is superiorly adjacent to the first portion 13 (that is to say, which is between the first portion 13 and the upper wall 9). Advantageously, in the preferred embodiment the snap-on style coupling is also achieved with the aid of the shaped element 8 made of soft material. In fact, in the preferred embodiment the elastic deformation of the semi-rigid body is combined with a corresponding elastic deformation of the shaped body 8 made of soft material, which thanks to its particular structure with greater thickness at the centre, behaves like a sort of spring for the semi-rigid body 7, first allowing an elastic deformation of the semi-rigid body 7 with upward arching of the upper wall 9 relative to its own central part, and then returning it substantially to the starting configuration to clamp the lateral walls 11 on the upper edge 5.

That first projecting portion 13 forms a hooking housing in which at least one third portion 15 is inserted, belonging to the related perimetric side board 4. The interaction between the first portion 13 and the third portion 15 prevents upward sliding of the protective element 6.

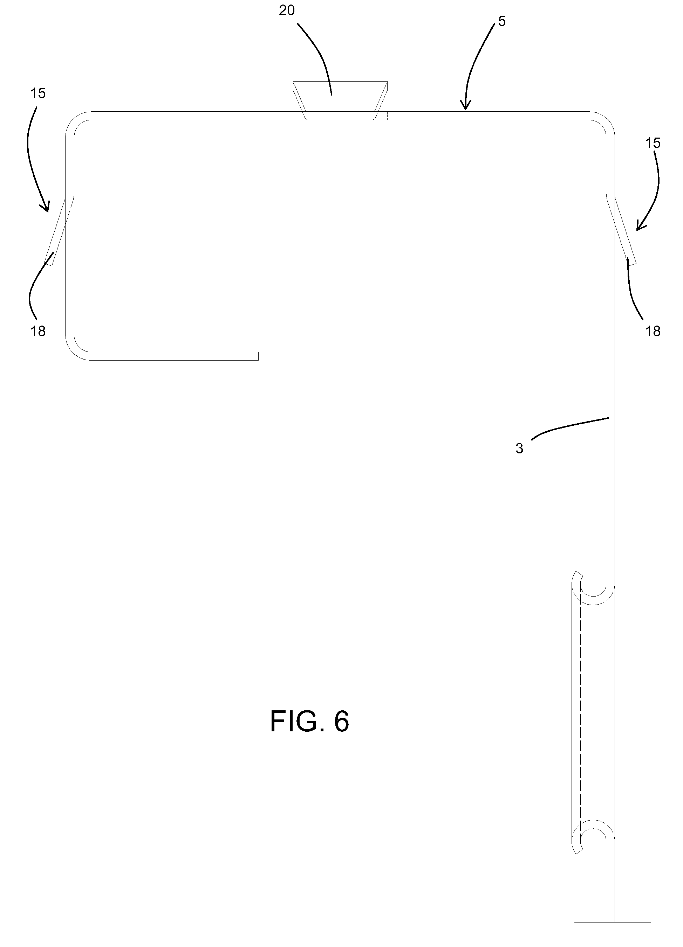

Advantageously, in the embodiments illustrated in Figures 1 to 8 and 11, each lateral wall 11 comprises, at its inner face 12, at least one shaped first seat 16 delimited at the bottom by the first projecting portion 13 and forming the hooking housing. In fact, each first seat 16 is a recess in the respective inner face 12. In contrast, in the embodiment in Figures 9, 10 and 13, the first portion 13 projects relative to the main lying plane of the inner face 12 and forms the hooking housing on its own.

Preferably, the top of the first projecting portion 13 of each lateral wall 11 forms a hooking surface 17 facing towards the upper wall 9 and extending at least mainly either in a horizontal plane (as in the accompanying drawings) or in a plane angled and converging towards the upper wall 9 (in this case the first seat 16 will be an undercut).

In the preferred embodiment, the first seat 16 is constituted of a first groove extending along the entire length of the protective element 6 parallel with the main line of extension of the protective element 6. However, in other embodiments each first seat 16 may also be localised and consist of a respective notch in the inner face 12.

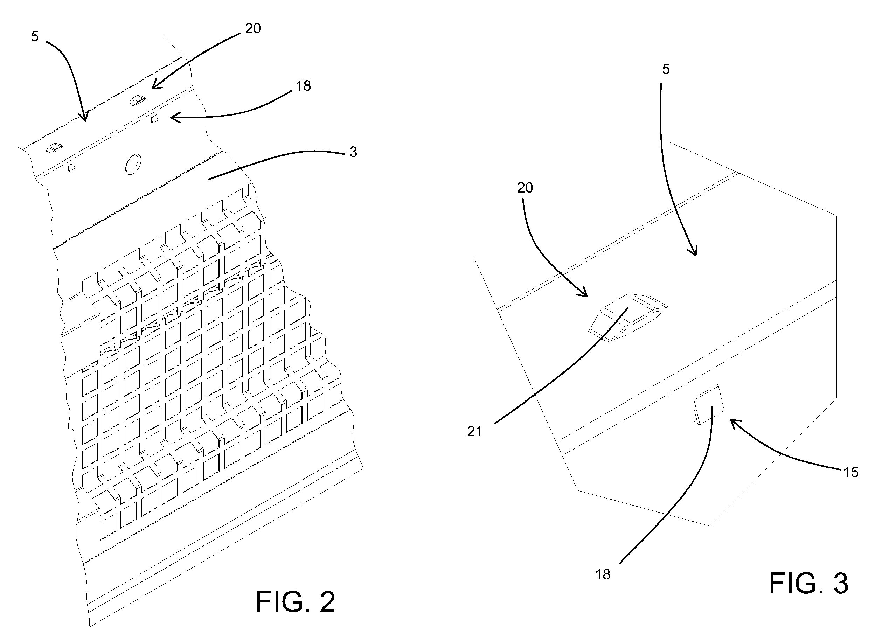

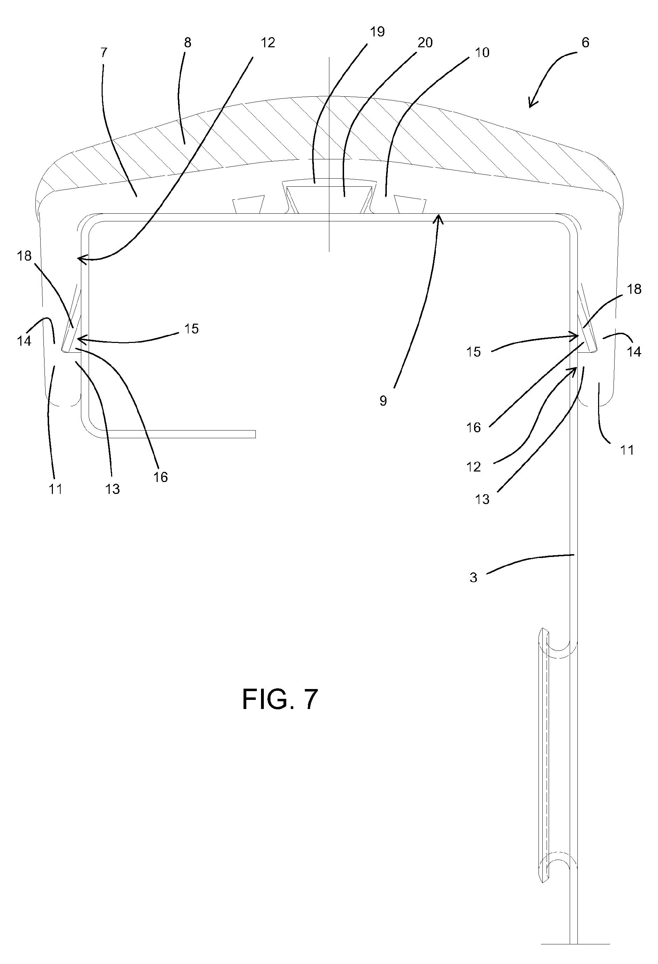

Regarding each third portion 15 which couples to the first portion 13 (and to the first seat 16 if present), in the preferred embodiments it may be either a free edge of the perimetric side board 4 (Figure 10) or a shaped portion of the perimetric side board 4 (Figures 7, 8 and 13). Advantageously, both the free edge and the shaped portion (as in Figure 11 although in that case the shaped portion also constitutes a free edge) may extend along the entire length of the protective element 6 parallel with the main line of extension. However, preferably, in the case of a shaped portion, the respective perimetric side board 4 comprises a plurality of third portions 15 each constituted of at least one first element 18 projecting outwards and fixed to the perimetric side board 4. The first projecting elements 18 are distributed along a line parallel with the main line of extension of the protective element 6 (Figure 2).

In the preferred embodiment, each projecting element 18 is constituted of either a portion of the respective perimetric side board 4 deformed outwards, or of a portion of the perimetric side board 4 partly separated from the adjacent portions and deformed outwards. In the latter case each first projecting element 18 may be constituted of a tongue of the material of the perimetric side board 4 which is connected to the rest of the side board only at the top and which diverges outwards proceeding downwards, as shown in Figure 3. Alternatively, the projecting element could in any case be obtained by stamping/punching and could be partly or completely connected to the rest of the material even at its sides and/or at the bottom.

However, as shown in the accompanying drawings, in the preferred embodiment the protective element 6 has the same cross-section along its entire length. In contrast, in turn either the third portion 15 may extend along the entire length of the protective element 6 (Figures 10 and 11), or the perimetric side board 4 may comprise a plurality of third portions 15 which are distributed along the entire length of the protective element 6.

According to the invention, the upper wall 9 of the protective element 6 comprises, at its lower face 10, at least one shaped second seat 19 in which there is inserted one or more second projecting elements 20 which are fixed to the respective side board. The shaped second seat 19 and each second projecting element 20 operate in conjunction with one another to prevent sliding of the protective element 6 transversally to the upper edge 5. Although in the embodiment illustrated the two operating in conjunction with one another prevents sliding of the protective element 6 on the upper edge 5 in both directions along a line perpendicular to its main line of extension, in other embodiments it could also be the case that the second seat 19 and the second projecting element 20 are shaped to prevent sliding only in one direction along said line perpendicular to the main line of extension (for example, only to the right or only to the left, relative to the representation in Figure 7).

Regarding the second seat 19, like the first seat 16, it too may advantageously be constituted of a second groove extending along the entire length of the protective element 6 parallel with the main line of extension of the protective element 6. However, in other embodiments the second seat 19 may also be localised and consist of a respective notch in the lower face 10.

Advantageously, in some preferred embodiments such as those illustrated, the second seat 19, transversally to the main line of extension, has an undercut cross-section and each second projecting element 20 is inserted snap-on style in the second seat 19 (insertion being achieved thanks to elastic deformation of the semi-rigid body 7).

In contrast, each second projecting element 20 may be made in a similar way to that described relative to the first projecting elements 18.

In particular, it may either extend continuously along the entire length of the protective element 6 parallel with the main line of extension, or it may be localised on a limited portion, as shown in the accompanying drawings. Moreover, in the latter case, preferably each second projecting element 20 is constituted of a portion of the perimetric side board 4 which is deformed outwards, or if necessary even partly separated from the portions of side board adjacent to it. For example, each second projecting element 20 may, similarly to the first projecting elements 18, be constituted of a tongue of material of the perimetric side board 4 which is angled upwards (solution designed to prevent sliding in only one direction), or of a strip 21 of material of the perimetric side board 4 having two opposite sides which are separated from the rest of the perimetric side board 4 and which is deformed upwards to form a convexity relative to the rest of the perimetric side board 4 (Figure 3). In the embodiment illustrated, to allow snap-on style hooking in the undercut seat, the strip 21 of material is wider at the centre and narrower at the parts which are connected to the rest of the side board (Figure 7).

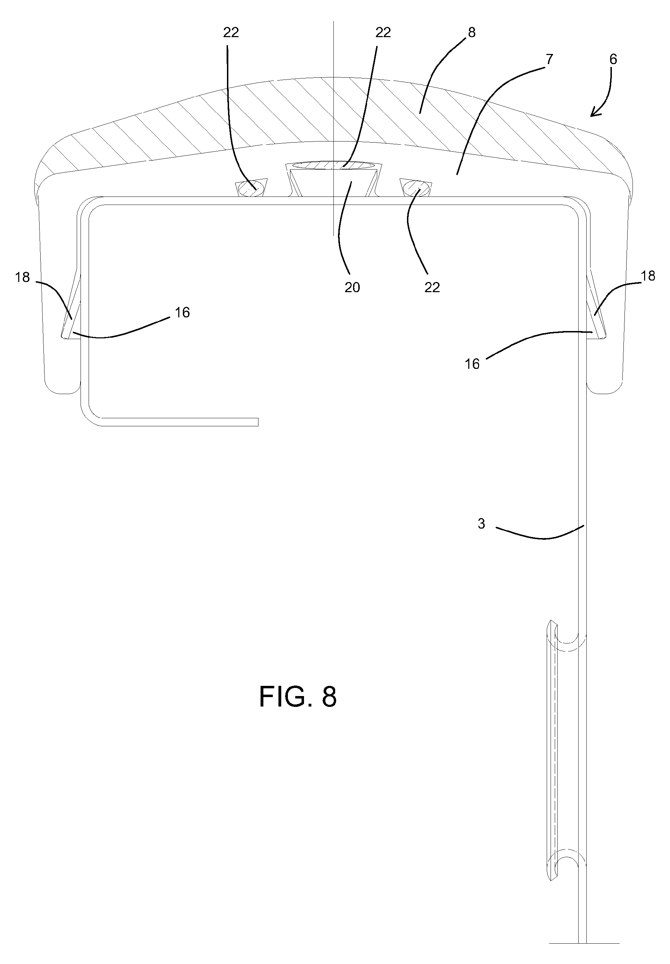

However, in the preferred embodiment, the side board equipped with the protective element 6 comprises a plurality of second projecting elements 20 distributed along the length of the protective element 6 (Figure 2). Depending on the embodiments, either connection of the protective element 6 to the respective perimetric side board 4 occurs only snap-on style, or glue 22 may be interposed between the two (Figure 8), similarly to what currently occurs.

Operation of this invention is very simple. The protective element 6 is advantageously hooked to the upper edge 5 of the side board by mechanical deformation of the U-shaped semi-rigid body 7 which is pressed against the upper edge 5. As a result of the pressing, the lateral walls 11 spread apart until the hooking position is reached, where they return to the substantially non-deformed condition, hooking the first portions to the third portions 15.

If the second seats are present and have an undercut cross-section, during the hooking step they temporarily deform until the second projecting elements 20 are inside them.

As already indicated, if necessary, before hooking it is possible to apply glue 22 between the hooking element and the upper edge 5.

Alternatively, at least in the case of connection without glue 22, if the protective element 6 has a constant cross-section along its entire length, it is also possible for it to be fitted on the upper edge 5 according to a line of movement coinciding with that which must be its line of extension when mounting is complete (obviously, provided that there are no other parts of the body 1 which prevent suitable alignment of the protective element 6 relative to the upper edge 5).

This invention brings important advantages.

First, the special mechanical connection invented allows the protective element to be hooked to the respective side board in a way that it easy and extremely fast. Moreover, there is no need for a wait time before being able to stress the protective element, even if glue is used (glue which may be used, for example, to prevent the protective element from being subjected to small movements caused by any play).

Second, thanks to this new mechanical hooking method, it was possible to reduce or even eliminate the glue. This means that, compared with prior art bodies, it is much easier to remove the protective element from the body when it has reached the end of its useful life.

Furthermore, the industrial vehicle body according to this invention guarantees excellent resistance of the protective element even against any stresses which may tend to cause it to rotate, such as those which could be produced, after vehicle acceleration or deceleration, by objects resting at an angle on one edge of the protective element (such as poles, if the element is used as a pole rest). That applies all the more in the case of bodies in which the second seat and the second projecting elements are also present. Finally, it should be noticed that this invention is relatively easy to produce and that even the cost linked to implementing the invention is not very high. The invention described above may be modified and adapted in several ways without thereby departing from the scope of the invention, which is defined by the appended claims.

## Claims

1. An industrial vehicle body comprising a bed (2) and a plurality of perimetric side boards (4), where at least one protective element (6) is mounted at an upper edge (5) of at least one perimetric side board (4), the protective element (6) comprising, transversally to its own main line of extension, an inverted U-shaped cross-section and comprising at least a semi-rigid body (7) and a shaped layer (8) of soft material applied on top of the semi-rigid body (7), the protective element (6) also comprising an upper wall (9) extending mainly horizontally and comprising a lower coupling face (10) resting on said upper edge (5), and two lateral walls (11) which are fixed to the upper wall (9), extending mainly vertically and each comprising an inner coupling face (12) which is at least partly opposite said at least one perimetric side board (4), the upper wall (9) and the lateral walls (11) being part of the semi-rigid body (7), wherein each lateral wall (11) comprises a first portion (13) projecting towards the other lateral wall (11) relative to a second portion (14) of the lateral wall (11) itself which is adjacent to the first portion (13) on the side of the upper wall (9), said first projecting portion (13) forming a hooking housing in which at least one third portion (15) is inserted, belonging to the at least one perimetric side board (4), the interaction between the first portion (13) and the third portion (15) opposing the upward sliding and rotation about itself of the protective element (6), wherein the protective element (6) is hooked snap-on style to the at least one perimetric side board (4); and wherein the upper wall (9) comprises, at its lower coupling face (10), at least one shaped seat (19) in which there is inserted one or more projecting elements (20) which are fixed to the at least one side board, the shaped seat (19) and each projecting element (20) operating in conjunction with one another to prevent the sliding of the protective element (6) transversally to the upper edge (5), at least in one direction, along a line which is perpendicular to its main line of extension.

2. The industrial vehicle body according to claim 1, **characterised in that**, transversally to said main line of extension, the shaped layer (8) of soft material has a first thickness at its own central part and a second thickness at its own lateral edges, the first thickness being greater than the second thickness.

3. The industrial vehicle body according to claim 1 or 2, **characterised in that** the top of the first projecting portion (13) of each lateral wall (11) forms a hooking surface (17) facing towards the upper wall (9) and extending at least mainly either in a horizontal plane or in a plane angled towards the upper wall (9).

4. The industrial vehicle body according to any one of the preceding claims, **characterised in that** each lateral wall (11) comprises, at its inner face (12), at least one further shaped seat (16) delimited at the bottom by the first projecting portion (13).

5. The industrial vehicle body according to claim 4, **characterised in that** the further shaped seat (16) is constituted of a first groove extending along the entire length of the protective element (6) parallel with the main line of extension of the protective element (6).

6. The industrial vehicle body according to any one of the preceding claims, **characterised in that** said third portion (15) is constituted of a free edge or a shaped portion of the at least one side board extending along the entire length of the protective element (6) parallel with the main line of extension.

7. The industrial vehicle body according to any one of the preceding claims, **characterised in that** it comprises a plurality of third portions (15) each constituted of at least one further element (18) projecting outwards and fixed to the at least one side board.

8. The industrial vehicle body according to any one of the preceding claims, **characterised in that** the shaped seat (19) and each of the projecting elements (20) operate in conjunction with one another to prevent the sliding of the protective element (6) on the upper edge (5) in both directions along said line which is perpendicular to its main line of extension.

9. The industrial vehicle body according to claim 8, **characterised in that** the shaped seat (19) transversally to the main line of extension has an undercut cross-section and **in that** each projecting element (20) is inserted snap-on style in the shaped seat (19).

10. The industrial vehicle body according to any one of the claims from 7 to 9, **characterised in that** each projecting element or further projecting element is constituted of a portion of the at least one perimetric side board (4) deformed outwards or of a portion of the at least one perimetric side board (4) partly separated from the adjacent portions and deformed outwards.

11. The industrial vehicle body according to claims 7 and 10, **characterised in that** each further projecting element (18) is constituted of a tongue of material of the at least one perimetric side board (4) which diverges outwards proceeding downwards.

12. The industrial vehicle body according to claim 10, **characterised in that** each projecting element (20) is constituted of a tongue of material of the at least one perimetric side board (4) which is angled upwards, or of a strip (21) of material of the at least one perimetric side board (4) having two opposite sides which are separated from the rest of the at least one perimetric side board (4) and which is deformed upwards to form a convexity relative to the rest of the at least one perimetric side board (4).

13. The industrial vehicle body according to any one of the preceding claims, **characterised in that** the protective element (6) has the same cross-section along its entire length and **in that** either the third portion (15) extends along the entire length of the protective element (6) or the at least one perimetric side board (4) comprises a plurality of third portions (15) which are distributed along the entire length of the protective element (6).

## Patentansprüche

1. Nutzfahrzeugaufbau, enthaltend einen Kasten (2) und eine Anzahl von umlaufenden Seitenwänden (4), bei welchem wenigstens ein Schutzelement (6) an einer oberen Kante (5) von wenigstens einer umlaufenden Seitenwand (4) montiert ist, wobei das Schutzelement (6) quer zu seiner eigenen Ausdehnungslinie einen umgekehrten U-förmigen Querschnitt aufweist, und wobei es wenigstens einen halbsteifen Körper (7) enthält, sowie eine aus weichem Material geformte Schicht (8), angebracht an der oberen Seite des halbsteifen Körpers (7), wobei das Schutzelement (6) ebenfalls eine obere Wand (9) enthält, die sich vorliegend horizontal erstreckt und eine untere Verbindungsfläche (10) aufweist, die auf der genannten oberen Kante (5) aufliegt, und zwei Seitenwände (11), welche an der oberen Wand (9) befestigt sind, sich vorwiegend vertikal erstrecken und eine interne Verbindungsfläche (12) enthalten, welche wenigstens teilweise der genannten wenigstens einer umlaufenden Seitenwand (4) zugewandt ist, wobei die obere Wand (9) und die Seitenwände (11) Teil des halbsteifen Körpers (7) bilden, bei welchem jede Seitenwand (11) einen ersten, zu der anderen Seitenwand (11) hin hervorstehenden Abschnitt (13) enthält, und zwar im Verhältnis zu einem zweiten Abschnitt (14) der Seitenwand (11) selbst, welcher sich auf der Seite der oberen Wand (9) an den ersten Abschnitt (13) anschliesst, wobei der genannte erste Abschnitt (13) eine hakenartige Aufnahme bildet, in welche wenigstens ein zu der wenigstens einen umlaufenden Seitenwand (4) gehörender dritter Abschnitt (15) eingesetzt wird, wobei das Zusammenwirken zwischen dem ersten Abschnitt (13) und dem dritten Abschnitt (15) dem Gleiten nach oben und der Umdrehung um sich selbst des Schutzelementes (6) entgegenwirkt, bei welchem das Schutzelement (6) durch Einrasten an der wenigstens einen umlaufenden Seitenwand (4) eingehakt ist; und bei welchem die obere Wand (9) an ihrer unteren Verbindungsfläche (10) wenigstens einen geformten Sitz (19) enthält, in welchen ein oder mehrere hervorstehende Elemente (20) eingesetzt sind, die an der wenigstens einen Seitenwand befestigt sind, wobei der geformte Sitz (19) und jedes hervorstehende Element (20) miteinander zusammenarbeiten, um das Gleiten des Schutzelementes (6) quer zu der oberen Kante (5) wenigstens in einer Richtung entlang einer Linie zu verhindern, welche lotrecht zu dessen Hauptausdehnungslinie verläuft.

2. Nutzfahrzeugaufbau nach Patentanspruch 1, **dadurch gekennzeichnet, dass** quer zu der genannten Hauptausdehnungslinie die geformte Schicht (8) aus weichem Material eine erste Dicke an ihrem eigenen mittleren Abschnitt und eine zweite Dicke an den eigenen seitlichen Kanten hat, wobei die erste Dicke grösser ist als die zweite Dicke.

3. Nutzfahrzeugaufbau nach Patentanspruch 1 oder 2, **dadurch gekennzeichnet, dass** das obere Ende des ersten hervorstehenden Abschnittes (13) einer jeden Seitenwand (11) eine Hakenfläche (17) bildet, die der oberen Wand (9) zugewandt ist und sich wenigstens hauptsächlich entweder in einer horizontalen Ebene oder in einer zu der oberen Wand (9) hin angewinkelten Ebene erstreckt.

4. Nutzfahrzeugaufbau nach einem jeden der vorstehenden Patentansprüche, **dadurch gekennzeichnet, dass** jede Seitenwand (11) an ihrer inneren Fläche (12) wenigstens einen weiteren geformten Sitz (16) aufweist, der unten durch den ersten hervorstehenden Abschnitt (13) abgegrenzt wird.

5. Nutzfahrzeugaufbau nach Patentanspruch 4, **dadurch gekennzeichnet, dass** der weitere geformte Sitz (16) aus einer ersten Rille gebildet ist, die sich über die gesamte Länge des Schutzelementes (6) erstreckt, und zwar parallel zu der Hauptausdehnungslinie des Schutzelementes (6).

6. Nutzfahrzeugaufbau nach einem jeden der vorstehenden Patentansprüche, **dadurch gekennzeichnet, dass** der genannte dritte Abschnitt (15) aus einer freien Kante oder aus einem geformten Abschnitt von wenigstens einer Seitenwand gebildet wird, die sich entlang der gesamten Länge des Schutzelementes (6) parallel zu der Hauptausdehnungslinie erstreckt.

7. Nutzfahrzeugaufbau nach einem jeden der vorstehenden Patentansprüche, **dadurch gekennzeichnet, dass** er eine Anzahl von dritten Abschnitten (15) enthält, jeder bestehend aus wenigstens einem weiteren Element (18), dass sich nach aussen erstreckt und an der wenigstens einen Seitenwand befestigt ist.

8. Nutzfahrzeugaufbau nach einem jeden der vorstehenden Patentansprüche, **dadurch gekennzeichnet, dass** der geformte Sitz (19) und jedes der hervorstehenden Elemente (20) miteinander zusammenwirken, um das Gleiten des Schutzelementes (6) auf der oberen Kante (5) in beiden Richtungen entlang der genannten Linie zu verhindern, welche lotrecht zu dessen Hauptausdehnungslinie verläuft.

9. Nutzfahrzeugaufbau nach Patentanspruch 8, **dadurch gekennzeichnet, dass** der geformte Sitz (19) quer zu der Hauptausdehnungslinie einen Unterschnitt-Querschnitt hat, und dadurch, dass jedes hervorstehende Element (20) einrastend in den geformten Sitz (19) eingesetzt wird.

10. Nutzfahrzeugaufbau nach einem jeden der Patentansprüche von 7 bis 9, **dadurch gekennzeichnet, dass** jedes hervorstehende Element oder weitere hervorstehende Element aus einem nach aussen verformten Abschnitt von wenigstens einer umlaufenden Seitenwand (4) gebildet wird, oder aus einem Abschnitt von wenigstens einer umlaufenden Seitenwand (4), der teilweise von den angrenzenden Abschnitten getrennt und nach aussen verformt ist.

11. Nutzfahrzeugaufbau nach den Patentansprüchen 7 und 10, **dadurch gekennzeichnet, dass** jedes weitere hervorstehende Element (18) aus einer Zunge des Materials von wenigstens einer umlaufenden Seitenwand (4) gebildet ist, die nach aussen divergiert und sich nach unten erstreckt.

12. Nutzfahrzeugaufbau nach Patentanspruch 10, **dadurch gekennzeichnet, dass** jedes hervorstehende Element (20) aus einer Zunge des Materials von wenigstens einer umlaufenden Seitenwand (4) gebildet ist, welche nach oben angewinkelt ist, oder aus einem Streifen (21) des Materials von wenigstens einer umlaufenden Seitenwand (4), der zwei entgegengesetzte Seiten aufweist, getrennt vom Rest der wenigstens einen umlaufenden Seitenwand (4), und welcher nach oben verformt ist, um eine Konvexität im Verhältnis zum Rest der wenigstens einen umlaufenden Seitenwand (4) zu bilden.

13. Nutzfahrzeugaufbau nach einem jeden der vorstehenden Patentansprüche, **dadurch gekennzeichnet, dass** das Schutzelement (6) den gleichen Querschnitt entlang seiner gesamten Länge hat, und dadurch, dass entweder der sich entlang der gesamten Länge des Schutzelementes (6) erstreckende dritte Abschnitt (15) oder wenigstens eine umlaufende Seitenwand (4) eine Anzahl von dritten Abschnitten (15) aufweist, welche entlang der gesamten Länge des Schutzelementes (6) verteilt sind.

## Revendications

1. Une carrosserie de véhicule industriel comprenant une plateforme (2) et une pluralité de ridelles latérales périmétriques (4), où au moins un élément de protection (6) est monté au niveau d'un bord supérieur (5) d'au moins une ridelle latérale périmétrique (4), l'élément de protection (6) comprenant, transversalement à sa ligne d'extension principale, une section en U renversé et comprenant au moins un corps semi-rigide (7) et une couche profilée (8) de matériau souple appliqué sur le dessus du corps semi-rigide (7), l'élément de protection (6) comprenant aussi une paroi supérieure (9) s'étendant principalement à l'horizontale et comprenant une face d'accouplement inférieure (10) reposant sur ledit bord supérieur (5), et deux parois latérales (11) qui sont fixées à la paroi supérieure (9), s'étendant principalement à la verticale et comprenant chacune une face d'accouplement intérieure (12) qui est au moins partiellement opposée à ladite au moins une ridelle latérale périmétrique (4), la paroi supérieure (9) et les parois latérales (11) faisant partie du corps semi-rigide (7),
dans laquelle chaque paroi latérale (11) comprend une première portion (13) saillant vers l'autre paroi latérale (11) par rapport à une deuxième portion (14) de la paroi latérale (11) elle-même qui est adjacente à la première portion (13) du côté de la paroi supérieure (9), ladite première portion en saillie (13) formant un logement d'accrochage dans lequel est insérée au moins une troisième portion (15), appartenant à ladite au moins une ridelle latérale périmétrique (4), l'interaction entre la première portion (13) et la troisième portion (15) s'opposant au glissement vers le haut et à la rotation sur lui-même de l'élément de protection (6), dans laquelle l'élément de protection (6) est accroché par enclenchement à ladite au moins une ridelle latérale périmétrique (4) ; et dans laquelle la paroi supérieure (9) comprend, au niveau de sa face d'accouplement inférieure (10), au moins un logement profilé (19) dans lequel sont insérés un ou plusieurs éléments en saillie (20) qui sont fixés à ladite au moins une ridelle latérale, le logement profilé (19) et chaque élément en saillie (20) coopérant entre eux pour empêcher le glissement de l'élément de protection (6) transversalement au bord supérieur (5), au moins dans une direction, le long d'une ligne qui est perpendiculaire à sa ligne d'extension principale.

2. La carrosserie de véhicule industriel selon la revendication 1, **caractérisée en ce que**, transversalement à ladite ligne d'extension principale, la couche profilée (8) de matériau souple a une première épaisseur au niveau de sa propre partie centrale et une deuxième épaisseur au niveau de ses propres bords latéraux, la première épaisseur étant supérieure à la deuxième épaisseur.

3. La carrosserie de véhicule industriel selon la revendication 1 ou 2, **caractérisée en ce que** le dessus de la première portion en saillie (13) de chaque paroi latérale (11) forme une surface d'accrochage (17) orientée vers la paroi supérieure (9) et s'étendant au moins principalement soit dans un plan horizontal soit dans un plan incliné vers la paroi supérieure (9).

4. La carrosserie de véhicule industriel selon l'une quelconque des revendications précédentes, **caractérisée en ce que** chaque paroi latérale (11) comprend, au niveau de sa face intérieure (12), au moins un autre logement profilé (16) délimité inférieurement par la première portion en saillie (13).

5. La carrosserie de véhicule industriel selon la revendication 4, **caractérisée en ce que** l'autre logement profilé (16) est constitué par une première rainure s'étendant sur toute la longueur de l'élément de protection (6) parallèlement à la ligne d'extension principale de l'élément de protection (6).

6. La carrosserie de véhicule industriel selon l'une quelconque des revendications précédentes, **caractérisée en ce que** ladite troisième portion (15) est constituée par un bord libre ou une portion profilée de ladite au moins une ridelle latérale s'étendant sur toute la longueur de l'élément de protection (6) parallèlement à la ligne d'extension principale.

7. La carrosserie de véhicule industriel selon l'une quelconque des revendications précédentes, **caractérisée en ce qu'**elle comprend une pluralité de troisièmes portions (15) constituées, chacune, par au moins un autre élément (18) saillant vers l'extérieur et fixé à ladite au moins une ridelle latérale.

8. La carrosserie de véhicule industriel selon l'une quelconque des revendications précédentes, **caractérisée en ce que** le logement profilé (19) et chacun des éléments en saillie (20) coopèrent entre eux pour empêcher le glissement de l'élément de protection (6) sur le bord supérieur (5) dans les deux directions le long de ladite ligne qui est perpendiculaire à sa ligne d'extension principale.

9. La carrosserie de véhicule industriel selon la revendication 8, **caractérisée en ce que** le logement profilé (19) présente transversalement à la ligne d'extension principale une section en contre-dépouille et **en ce que** chaque élément en saillie (20) est inséré par enclenchement dans le logement profilé (19).

10. La carrosserie de véhicule industriel selon l'une quelconque des revendications de 7 à 9, **caractérisée en ce que** chaque élément en saillie ou autre élément en saillie est constitué par une portion de ladite au moins une ridelle latérale périmétrique (4) déformée vers l'extérieur ou par une portion de ladite au moins une ridelle latérale périmétrique (4) partiellement séparée des portions adjacentes et déformée vers l'extérieur.

11. La carrosserie de véhicule industriel selon les revendications 7 et 10, **caractérisée en ce que** chaque autre élément en saillie (18) est constitué par une languette de matériau de ladite au moins une ridelle latérale périmétrique (4) qui diverge vers l'extérieur en allant vers le bas.

12. La carrosserie de véhicule industriel selon la revendication 10, **caractérisée en ce que** chaque élément en saillie (20) est constitué par une languette de matériau de ladite au moins une ridelle latérale périmétrique (4) qui est inclinée vers le haut, ou par une bande (21) de matériau de ladite au moins une ridelle latérale périmétrique (4) qui a deux côtés opposés séparés du reste de ladite au moins une ridelle latérale périmétrique (4) et qui est déformée vers le haut pour former une convexité par rapport au reste de ladite au moins une ridelle latérale périmétrique (4).

13. La carrosserie de véhicule industriel selon l'une quelconque des revendications précédentes, **caractérisée en ce que** l'élément de protection (6) a la même section sur toute sa longueur et **en ce que** soit la troisième portion (15) s'étend sur toute la longueur de l'élément de protection (6), soit ladite au moins une ridelle latérale périmétrique (4) comprend une pluralité de troisièmes portions (15) qui sont réparties sur toute la longueur de l'élément de protection (6).
